# EUROPEAN PATENT SPECIFICATION

(11) **EP 2 818 960 B1**
(45) Date of publication and mention of the grant of the patent: **14.11.2018**
(21) Application number: 13173398.2
(22) Date of filing: 24.06.2013
(51) Int. Cl.: G05D 7/01

(54) **Membrane for dynamic valve**
Membran für ein dynamisches Ventil
Membrane pour soupape dynamique

(43) Date of publication of application: 31.12.2014
(73) Proprietor: Danfoss A/S, 6430 Nordborg (DK)
(72) Inventor: Bjerggaard, Niels, 8370 Hadsten (DK); Christensen, Morten H., 8963 Auning (DK); Hansen, René, 7323 Give (DK); Hølck, Poul, 8300 Odder (DK); Rasmussen, Bent Karsten, 8600 Silkeborg (DK)
(74) Representative: Keil & Schaafhausen Patent- und Rechtsanwälte PartGmbB

(56) References cited:
- EP-A1- 2 482 160
- DE-A1- 3 329 530
- US-A- 5 031 875
- US-A- 5 163 355
- US-A- 5 335 641

## Description

The invention relates to a valve arrangement for controlling a flow of a heating or cooling fluid, said valve arrangement comprising: a housing having an inlet and an outlet, a pressure regulating valve being arranged between said inlet and said outlet and having a regulating valve element, said regulating valve element being connected to a membrane, said membrane comprising at least one sealing bead.

Such a valve arrangement is for example known from EP 2 482 160 A1. A pressure regulating valve is used to keep a pressure difference over a flow control valve constant during normal operation to ensure that the flow through a flow control valve depends directly on the opening degree of the flow control valve. Furthermore, a membrane supporting structure is provided to prevent damage to the membrane in case a pressure acting on the membrane exceeds a predetermined value. The membrane comprises two sealing beads as well as a flexible part that is arranged between the two sealing beads.

Such a valve arrangement has the problem that under certain conditions vibrations and unwanted noises can occur. These problems are related to the fact that the position of the membrane in the known valve arrangements is not always well-defined in relation to the position of the regulating valve element. In particular the radially outer sealing bead could get stuck in a too high or too low position when mounting the pressure regulating valve. Consequently during operation of the valve arrangement this could result in the flexible part of the membrane being more stretched or more loose than anticipated by design. This in turn may lead to the development of vibrations and noises in case a large pressure is acting on the membrane.

In US 5 031 875 A a fluid flow control valve with a membrane is disclosed. The membrane comprises a radially outer sealing bead with two angular lips, each of which are arranged in channels. During assembly the membrane with the radially outer sealing bead is introduced into the channel of the housing body. Afterwards, a cap is threaded down onto the valve body, whereby the upper lip is being received in the channel of the cap.

US 5 335 641 A shows a pressure control valve with a membrane. At a radially outer end of the diaphragm sealing bead is placed in an angular groove of the valve housing. The sealing bead is held in the angular groove after a valve cover is fastened on top of the valve housing.

US 5 163 355 A discloses a negative pressure booster with a membrane. On a radially outer side the membrane comprises a sealing bead that is arranged between peripheral portions of two shells that are part of the housing of the negative pressure booster.

DE 3 329 530 A1 shows a piston with a membrane. The membrane comprises a sealing bead that is squeezed between a flange of a lower housing part and a flange of an upper housing part.

The task underlying the invention is to provide a valve arrangement with a membrane that has a well-defined position in relation to the regulating valve element and has a reduced risk of producing unwanted vibrations or noises.

This task is solved in that a first sealing bead comprises at least two steps, wherein the pressure regulating valve comprises a recess to accommodate a radially inner side of the first sealing bead, and wherein the radially inner side of the first sealing bead in larger than the recess, such that the first sealing bead is kept in the recess under a pretension.

By using a sealing bead with at least two steps it is easier to control the mounting position of this sealing bead in relation to the pressure regulating valve. In the state of the art the used sealing beads had substantially circular or semi-circular cross sections. Consequently, it was not ensured that in particular the radially outer sealing bead would slide well into the intended position between the housing and the pressure regulating valve during mounting. Now according to the invention the position of the first sealing bead can be controlled more exactly because the at least two steps allow to properly define the resting position of the first sealing bead. Consequently, the first sealing bead is much more likely to move in unison with the
regulating valve element upon mounting resulting in a well-defined position of the membrane. Furthermore the pressure regulating valve comprises a recess to accommodate the first sealing bead. In this case the first sealing bead rests with its radially inner side in the recess, allowing a good control of the position of the first sealing bead. The recess may for example be arranged in a support structure of the pressure regulating valve and may be arranged directly neighboring to a ledge. In this case the pressure regulating valve may enclose the first sealing bead at least partially from three sides.

In a preferred embodiment the membrane is substantially O-ring-shaped and the first sealing bead is arranged at a radially outer end of the membrane. This way the first sealing bead will be arranged in contact with the housing. Consequently, the movement of the membrane in relation to the housing and the pressure regulating valve will be much more predictable during mounting than with the solutions known in the state of the art.

In a further preferred embodiment the housing comprises at least one ledge that substantially matches the shape of at least one step of the first sealing bead. Arranging a ledge in the housing that matches the shape of at least one step will allow for a well-defined resting position of the first sealing bead after mounting.

In a preferred embodiment the pressure regulating valve comprises at least one ledge that substantially matches the shape of at least one step of the first sealing bead. Arranging a ledge in the regulating valve element will allow the pressure regulating valve to effectively pull the first sealing bead along in the direction of its movement upon mounting the pressure regulating valve.

In another preferred embodiment the membrane comprises at least two sealing beads and at least one flexible part arranged between the at least two sealing beads. This way the at least two sealing beads can on the one hand be used to seal the membrane and on the other hand define the edges of the membrane surface. The second sealing bead may be used to connect the membrane to the regulating valve element, wherein this second sealing bead may have a circular or semi-circular cross section or have a cross section matching that of the first sealing bead.

In an embodiment the first sealing bead is arranged in the valve arrangement under a pretension. For example, the radial extent of the first sealing bead may be chosen to be greater than the radial distance between the pressure regulating valve and the housing at the intended position of the first sealing bead. This way the first sealing bead will be elastically deformed during assembly and will thus be arranged in the valve arrangement under a pretension ensuring a tight seal.

In a further preferred embodiment the first sealing bead comprises at least one groove. In particular, the groove may be arranged between two radial protrusions of the sealing bead. Alternatively or additionally a groove may be arranged in the side of the first sealing bead facing away from the flexible part. In the latter case two protrusions may be formed next to the groove. This way in case a high pressure occurs the increased surface of the groove will result in an additional force that pushes the two protrusions apart, thus improving the tightness of the first sealing bead even further.

In another preferred embodiment the first sealing bead comprises at least one protrusion. At least one protrusion may be arranged in a radially outer side of the first sealing bead, thereby resting against the housing. Alternatively or additionally at least one protrusion may be arranged in the end of the first sealing bead facing away from the flexible part. In the latter case at least one of the protrusions may still rest against the housing to ensure a tight seal of the membrane.

In a further preferred embodiment at least one protrusion has a substantially rectangular cross section. This way one may ensure that the first sealing bead may still be in contact with the housing with a relatively large surface.

In yet another preferred embodiment at least one protrusion has a tapered cross section. Consequently the surface of the first sealing bead in contact with the housing and/or the pressure regulating valve may be limited by using such protrusions with a tapered cross section. In particular if such a protrusion with a tapered cross section is located at the radially outer side of the first sealing bead it will ensure that the surface of the first sealing bead in direct contact with the housing may be relatively small, thus preventing the first sealing bead from getting stuck in an unwanted position.

In another preferred embodiment the first sealing bead has a substantially rectangular body. Thus one may easily ensure that the first sealing bead comprises at least two steps. In this embodiment the first sealing bead may still comprise at least one protrusion and/or at least one groove. Consequently one may control the surface of the first sealing bead in contact with the housing and/or the pressure regulating valve as well as direct the elastic deformations of the first sealing bead.

In yet another preferred embodiment at least one groove is arranged in a radially outer side of the first sealing bead. This way the first sealing bead will preferably be deformed elastically at the side facing the housing. Furthermore, one may limit the surface of the first sealing bead in contact with the housing to ensure that the first sealing bead will move in unison with the pressure regulating valve upon mounting.

In yet another preferred embodiment at least one groove is arranged at an end of the first sealing bead facing away from the flexible part. Thus, two protrusions may be formed next to this groove. This way in case a high pressure occurs the increased surface of the groove will result in an additional force that pushes the two protrusions apart, consequently improving the tightness of the first sealing bead even further.

Preferred embodiments of the invention will now be described in more detail with reference to the drawings, wherein:
- Fig. 1: is a section of a valve arrangement according to the state of the art,
- Fig. 2: is an enlarged detail A of Fig. 1,
- Fig. 3: is a section of a valve arrangement according to the invention and
- Fig. 4: is an enlarged detail B of Fig. 3,
- Fig. 5-10: show alternative embodiments of the membrane to be used with the valve arrangement according to Fig. 3 and 4.

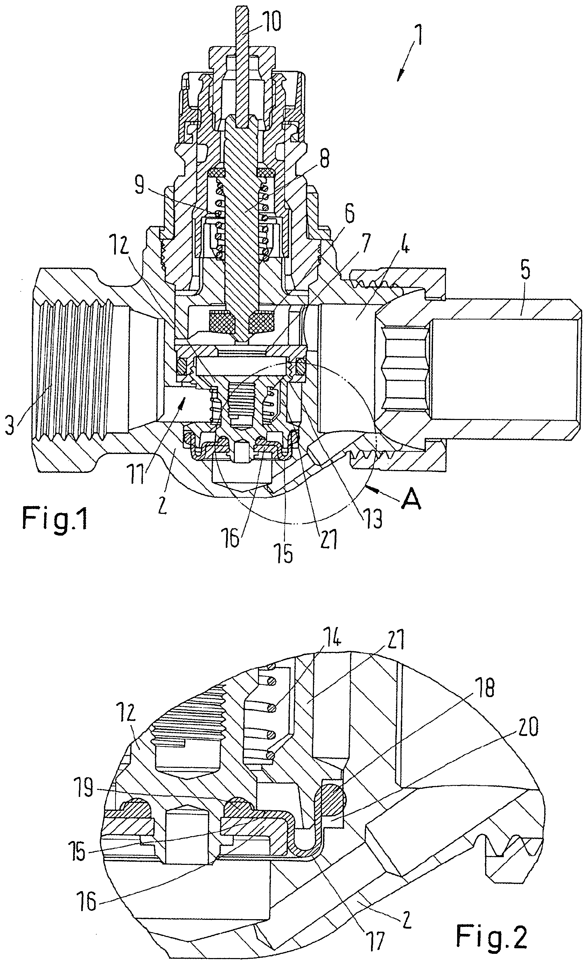

Fig. 1 and 2 thus show a valve arrangement 1 according to the state of the art, comprising a housing 2 as well as an inlet 3 and an outlet 4. Here the outlet 4 is connected to an outlet tube 5.

The valve arrangement also comprises a control valve with a control valve element 6 and a control valve seat 7 arranged between the inlet 3 and the outlet 4. The control valve element 6 is connected to a spindle 8 which is loaded in an opening position by a control valve spring 9. The spindle 8 is connected to a rod 10, which may be connected for example to a thermostatic actuator (not shown). However, any other suitable means for actuating the spindle 8 is of course also possible, for example a protection cab, a wheel or an electric motor.

By moving the control valve element 6 in a direction towards the control valve seat 7 the flow from the inlet to the outlet may be throttled. When the control valve seat 6 is moved in a direction away from the control valve seat 7 the flow resistance of the control valve is decreased.

A pressure regulating valve 11 is arranged between the inlet 3 and the flow control valve 6, 7. The pressure regulating valve 11 comprises a regulating valve element 12 as well as a regulating valve seat 13. In Fig. 1 the pressure regulating valve 11 is closed as the regulating valve element 12 rests against the regulating valve seat 13.

The regulating valve element 12 is loaded by a spring 14 (see Fig. 2) in an opening direction, i.e. in this case in upwards direction away from the regulating valve seat 13.

The regulating valve element 12 is connected to a membrane 15 by means of a fixing element 16. Furthermore, the membrane 15 has a flexible part 17 in which the membrane 15 can be deformed when the regulating valve element 12 is moved.

The membrane 15 also comprises two sealing beads 18, 19. The membrane 15 is in this case substantially O-ring-shaped, wherein a first sealing bead 18 is arranged at a radial outer end of the membrane 15 and a second sealing bead 19 is arranged at a radial inner end of the membrane 15.

The first sealing bead 18 is arranged between the pressure regulating valve 11 and the housing 2. As one can see from Fig. 2 the first sealing bead 18 is elastically deformed between the pressure regulating valve 12 and the housing 2 thereby ensuring a tight seal on the membrane. The first sealing bead 18 is here arranged in a sealing chamber 20. The regulating valve seat 13 is part of a support structure 21.

The second sealing bead 19 is fixed to the regulating valve element 12 by the fixing element 16. Consequently, when the regulating valve element 12 is moved the radial inner section of the membrane will be pulled along, thereby elastically deforming the flexible part 17 of the membrane 15.

The problem in this design is that the position of the first sealing bead 18 cannot be controlled well enough when assembling the valve arrangement 1. Therefore, the first sealing bead 18 can come to rest at the upper or the lower end of the sealing chamber 20. Therefore, the length of the flexible part 17 that is available for elastic deformations of the membrane can be longer or shorter than expected. This means that the flexible part 17 may be too long in the closed position of the regulating valve element 12 or too short in the open position of the regulating valve element 12. This in turn may lead to unwanted vibrations of the membrane in particular if a high pressure is acting on the membrane 15, resulting in the generation of unwanted noises.

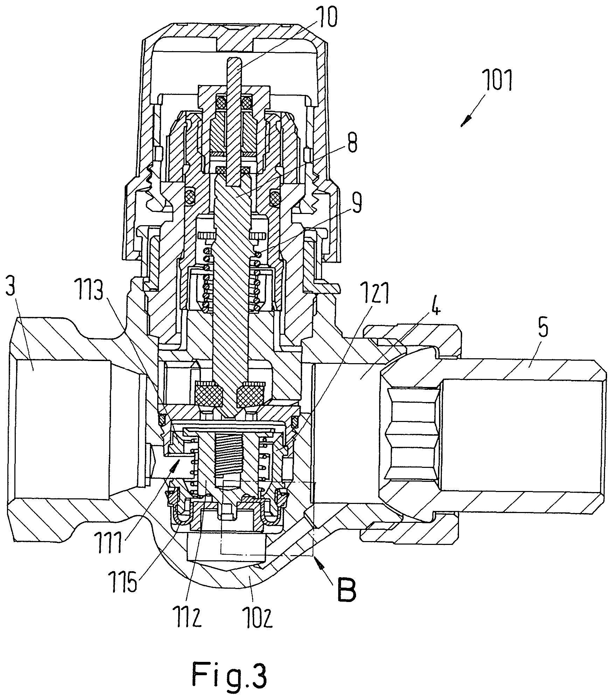

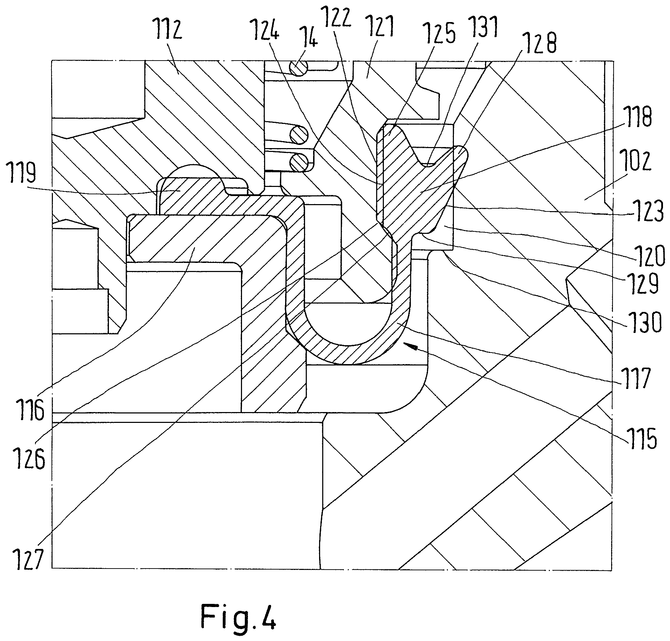

In Fig. 3 and 4 a valve arrangement 101 according to the invention is shown. Corresponding parts are labeled with the same reference signs as in Fig. 1 and 2.

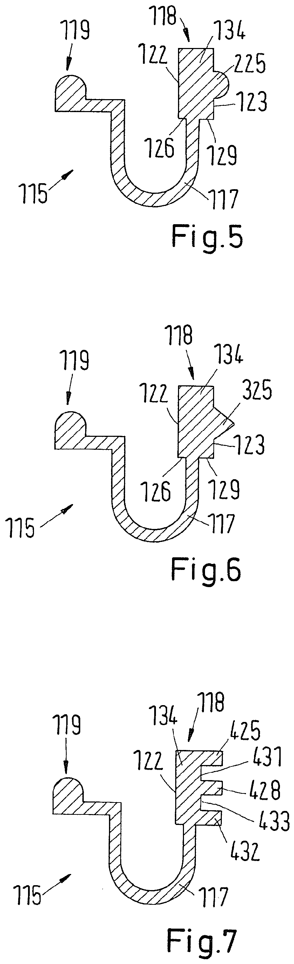

Here a pressure regulating valve 111 comprises a regulating valve element 112 as well as a regulating valve seat 113. The regulating valve seat 113 is again part of a support structure 121. A new type of membrane 115 is fixed against the regulating valve element 112 with a fixing element 116. Fig. 3 and 4 show a particular embodiment of the membrane 115. Alternative embodiments of the membrane 115 will be shown in Fig. 5 to 10. The membrane 115 comprises a flexible part 117 a first sealing bead 118 as well as a second sealing bead 119. The first sealing bead 118 is arranged at a radial outer end of the substantially O-ring-shaped membrane 115. The first sealing bead 118 is positioned in a sealing chamber 120. The sealing chamber 120 is arranged between the support structure 121 and the housing 102.

The first sealing bead 118 comprises a radially inner side 122 and a radially outer side 123. The radially inner side 122 is accommodated in a recess 124 of the support structure 121. The radially inner side 122 in this embodiment transitions into a protrusion 125 arranged at the end facing away from the flexible part 117. On the end facing towards the flexible part 117 the radially inner side 122 transitions into a step 126. The radially inner side 122 will preferably be larger than the recess 124, such that the first sealing bead 118 is kept under a pretension in the recess 124. Consequently the first sealing bead 118 does not have to be positively connected to the support structure 121, but it is already sufficient if the first sealing bead 118 is in direct contact with the support structure 121 at the protrusion 125 and the step 126. The support structure 121 also comprises a ledge 127 such that the first sealing bead can rest against the ledge 127 at the step 126. Furthermore, the ledge 127 additionally ensures that the first sealing bead 118 has a well-defined position after mounting. As is plainly visible in Fig. 2 the first sealing bead 18 did not have a well-defined resting position, thus the advantage of the invention already becomes clear at this point.

The first sealing bead 118 furthermore comprises a radially outer side 123. The radially outer side 123 in this embodiment also transitions into a second protrusion 128 that is again arranged at the end of the first sealing bead facing away from the flexible part 117. The radially outer side 123 rests against a radial outer wall of the sealing chamber 120, in particular against the housing 102. Here the maximum radial extent of the first sealing bead 118 is larger than the radial width of the sealing chamber 120. Consequently, the first sealing bead 118 rests against the radial walls of the sealing chamber 120 under a pretension, thereby ensuring a tight seal.

At the end of the radially outer side 123 facing towards the flexible part 117 a step 129 is arranged. The step 129 rests against a ledge 130 of the housing 102. This ensures that the resting position of the first sealing bead 118 is well-defined also relative to the housing 102.

Between the protrusions 125, 128 the first sealing bead 118 comprises a groove 131. This groove 131 ensures that in case a large pressure is acting on the membrane 115 the protrusions 125, 128 will be pushed apart thus improving the sealing of the first sealing bead 118. The first sealing bead 118 thus has a substantially V-shaped cross section in this embodiment.

Fig. 5 to 10 show alternative embodiments of the membrane 115 to be used with the valve arrangement 101 according to the invention. For simplicity only the membrane 115 is shown in Fig. 5 to 10 to highlight the differences in the first sealing bead 118 in the different embodiments. Corresponding parts are labeled with the same reference signs.

While in Fig. 3 and 4 the first sealing bead 118 had a substantially V-shaped cross section according to Fig. 5 the first sealing bead 118 comprises a rectangular body 134. The first sealing bead 118 again comprises two steps 126, 129 to ensure a well-defined resting position of the first sealing bead in the valve arrangement 101.

In this case the radially inner side 122 and the radially outer side 123 are arranged substantially parallel to each other. In the radially outer side 123 of the first sealing bead 118 a protrusion 225 is arranged. In this case the protrusion 225 is rounded and has a substantially semi-circular shape. The first sealing bead 118 thus will rest against the radially outer wall of the sealing chamber 120 at the protrusion 225. Preferably, the radial extent of the first sealing bead 118 between the radially inner side 122 and the protrusion 225 will be larger than the radial extent of the sealing chamber 120. Thus, the first sealing bead 118 will be elastically deformed at the protrusion 225 thereby ensuring a tight seal of the membrane 115.

Fig. 6 shows a third embodiment of the membrane 115. In this case the first sealing bead 118 again comprises a substantially rectangular body 134 and two steps 126, 129.

As in case of the second embodiment the first sealing bead 118 here comprises a protrusion 325 arranged in the radially outer side 123 of the first sealing bead 118. The protrusion 325 has a tapered cross section thereby ensuring that the surface of the first sealing bead 118 in direct contact with the housing 102 will be even smaller than in case of the second embodiment.

In Fig. 7 a fourth embodiment of the membrane 115 is shown. Here the first sealing bead 118 again comprises a substantially rectangular body 134. As in case of the second and third embodiments the radially inner side 122 is substantially flat. In contrast to the previous embodiments three protrusions 425, 428, 432 are arranged in the radially outer side 123 of the first sealing bead 118. Between the protrusions 425, 428 a first groove 431 is arranged. Between the protrusions 428, 432 a second groove 433 is located. Both grooves 431, 433 in this case have a substantially rectangular cross section.

All three protrusions 425, 428, 432 here also have a substantially rectangular cross section. Thus, the surface of the first sealing bead 118 in contact with the housing 122 will be relatively large, while still being lower than the surface in contact with the pressure regulating valve.

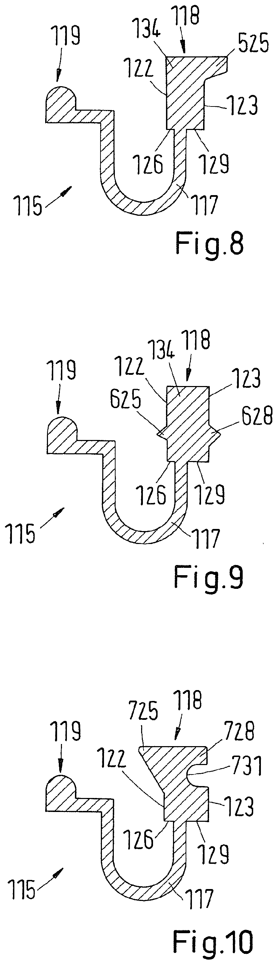

Fig. 8 shows a fifth embodiment of the membrane 115. The first sealing bead 118 once again comprises a substantially rectangular body 134. In the radially outer side 123 of the first sealing bead 118 one protrusion 525 is arranged. The protrusion 552 has a substantially rectangular cross section. In this embodiment it is ensured that at least some extended surface of the first sealing bead 118 is in contact with the housing 102 while the surface is still lower than in case of the fourth embodiment.

Fig. 9 shows a sixth embodiment of the membrane 115 according to the invention. Here, the first sealing bead 118 similarly to the third embodiment comprises a tapered protrusion 628 arranged in the radially outer side 123 of the first sealing bead 118. Additionally another tapered protrusion 625 is arranged in the radially inner side 122. The protrusions 625, 628 are preferably arranged oppositely to one another in radial direction. Thereby, one may increase the radial extent of the first sealing bead 118. Thus, the first sealing bead may be arranged in the sealing chamber 120 under a large radial pretension.

Fig. 10 shows a seventh embodiment of the membrane 115 to be used in the valve arrangement 101 according to the invention. Here, the first sealing bead 118 comprises a protrusion 725 with a tapered cross section in the radially inner side 122. The protrusion 725 in this case directly transitions into the end of the first sealing bead 118 facing away from the flexible part 117. On the radially outer side 123 another protrusion 728 as well as a groove 731 is located. The groove 731 here has a rounded cross section, while the protrusion 728 has a substantially rectangular cross section.

## Claims

1. A valve arrangement (101) for controlling a flow of a heating or cooling fluid, said valve arrangement (101) comprising: a housing (102) having an inlet (3) and an outlet (4), a pressure regulating valve (111) being arranged between said inlet (3) and said outlet (4) and having a regulating valve element (112), said regulating valve element (112) being connected to a membrane (115), said membrane (115) comprising at least one sealing bead (118, 119), **characterized in that** a first sealing bead (118) comprises at least two steps (126, 129), wherein the pressure regulating valve (111) comprises a recess (124) to accommodate a radially inner side (122) of the first sealing bead (118), and wherein the radially inner side (122) of the first sealing bead (118) is larger than the recess (124), such that the first sealing bead (118) is kept in the recess (124) under a pretension.

2. A valve arrangement according to claim 1, **characterized in that**, the membrane (115) is substantially O-ring-shaped and the first sealing bead (118) is arranged at a radial outer end of the membrane (115).

3. The valve arrangement according to claims 1 or 2, **characterized in that**, the housing (102) comprises at least one ledge (130) that substantially matches the shape of at least one step (129) of the first sealing bead (118).

4. The valve arrangement according to any of claims 1 to 3, **characterized in that**, the pressure regulating valve (111) comprises at least one ledge (127), that substantially matches the shape of at least one step (126) of the first sealing bead (118).

5. The valve arrangement according to any of claim 1 to 4, **characterized in that**, the membrane (115) comprises at least two sealing beads (118, 119) and at least one flexible part (117) arranged between the at least two sealing beads (118, 119).

6. The valve arrangement according to any of claims 1 to 5, **characterized in that**, the first sealing bead (118) comprises at least one groove (131, 431, 433, 731).

7. The valve arrangement according to any of claims 1 to 5, **characterized in that**, the first sealing bead (118) comprises at least one protrusion (125, 128, 225, 325, 425, 428, 432, 525, 625, 628, 725, 728).

8. The valve arrangement according to claim 7, **characterized in that**, at least one protrusion (425, 428, 432, 525, 728) has a substantially rectangular cross section.

9. The valve arrangement according to claims 7 or 8, **characterized in that**, at least one protrusion (125, 128, 325, 625, 628, 725) has a tapered cross section.

10. The valve arrangement according to any of claims 1 to 9, **characterized in that**, the first sealing bead has a substantially rectangular body (134).

11. The valve arrangement according to any of claims 6 to 10, **characterized in that**, at least one groove (431, 433, 731) is arranged in a radially outer side (123) of the first sealing bead (118).

12. The valve arrangement according to any of claims 6 to 11, **characterized in that**, at least one groove (131) is arranged at an end of the first sealing bead (118) facing away from the flexible part (117).

## Patentansprüche

1. Ventilanordnung (101) zum Steuern eines Stroms eines Heiz- oder Kühlfluids, wobei die Ventilanordnung (101) Folgendes umfasst: ein Gehäuse (102) mit einem Einlass (3) und einem Auslass (4), ein Druckregelventil (111), das zwischen dem Einlass (3) und dem Auslass (4) angeordnet ist und ein Regelventilelement (112) aufweist, wobei das Regelventilelement (112) mit einer Membran (115) verbunden ist, wobei die Membran (115) zumindest eine Dichtwulst (118, 119) umfasst, **dadurch gekennzeichnet, dass** eine erste Dichtwulst (118) zumindest zwei Stufen (126, 129) umfasst, wobei das Druckregelventil (111) eine Aussparung (124) zum Aufnehmen einer radial innere Seite (122) der ersten Dichtwulst (118) umfasst und wobei die radial innere Seite (122) der ersten Dichtwulst (118) größer als die Aussparung (124) ist, sodass die erste Dichtwulst (118) in der Aussparung (124) unter einer Vorspannung gehalten wird.

2. Ventilanordnung nach Anspruch 1, **dadurch gekennzeichnet, dass** die Membran (115) im Wesentlichen O-ringförmig ist und die erste Dichtwulst (118) an einem radialen äußeren Ende der Membran (115) angeordnet ist.

3. Ventilanordnung nach Anspruch 1 oder 2, **dadurch gekennzeichnet, dass** das Gehäuse (102) zumindest einen Absatz (130) umfasst, der im Wesentlichen der Form zumindest einer Stufe (129) der ersten Dichtwulst (118) entspricht.

4. Ventilanordnung nach einem der Ansprüche 1 bis 3, **dadurch gekennzeichnet, dass** das Druckregelventil (111) zumindest einen Absatz (127) umfasst, der im Wesentlichen der Form zumindest einer Stufe (126) der ersten Dichtwulst (118) entspricht.

5. Ventilanordnung nach einem der Ansprüche 1 bis 4, **dadurch gekennzeichnet, dass** die Membran (115) zumindest zwei Dichtwülste (118, 119) und zumindest ein zwischen den zumindest zwei Dichtwülsten (118, 119) angeordnetes flexibles Teil (117) umfasst.

6. Ventilanordnung nach einem der Ansprüche 1 bis 5, **dadurch gekennzeichnet, dass** die erste Dichtwulst (118) zumindest eine Nut (131, 431, 433, 731) umfasst.

7. Ventilanordnung nach einem der Ansprüche 1 bis 5, **dadurch gekennzeichnet, dass** die erste Dichtwulst (118) zumindest einen Vorsprung (125, 128, 225, 325, 425, 428, 432, 525, 625, 628, 725, 728) umfasst.

8. Ventilanordnung nach Anspruch 7, **dadurch gekennzeichnet, dass** zumindest ein Vorsprung (425, 428, 432, 525, 728) einen im Wesentlichen rechteckigen Querschnitt aufweist.

9. Ventilanordnung nach Anspruch 7 oder 8, **dadurch gekennzeichnet, dass** zumindest ein Vorsprung (125, 128, 325, 625, 628, 725) einen sich verjüngenden Querschnitt aufweist.

10. Ventilanordnung nach einem der Ansprüche 1 bis 9, **dadurch gekennzeichnet, dass** die erste Dichtwulst einen im Wesentlichen rechteckigen Körper (134) aufweist.

11. Ventilanordnung nach einem der Ansprüche 6 bis 10, **dadurch gekennzeichnet, dass** zumindest eine Nut (431, 433, 731) in einer radial äußeren Seite (123) der ersten Dichtwulst (118) angeordnet ist.

12. Ventilanordnung nach einem der Ansprüche 6 bis 11, **dadurch gekennzeichnet, dass** zumindest eine Nut (131) an einem Ende der ersten Dichtwulst (118) abgewandt vom flexiblen Teil (117) angeordnet ist.

## Revendications

1. Agencement de soupape (101) pour réguler un flux d'un fluide de chauffage ou de refroidissement, ledit agencement de soupape (101) comprenant : un boîtier (102) ayant une entrée (3) et une sortie (4), une soupape de régulation de pression (111) disposée entre ladite entrée (3) et ladite sortie (4) et ayant un élément de soupape de régulation (112), ledit élément de soupape de régulation (112) étant relié à une membrane (115), ladite membrane (115) comprenant au moins un bourrelet d'étanchéité (118, 119), **caractérisé en ce qu'**un premier bourrelet d'étanchéité (118) comprend au moins deux échelons (126, 129), la soupape de régulation de pression (111) comprenant un évidement (124) pour recevoir un côté radialement intérieur (122) du premier bourrelet d'étanchéité (118), et le côté radialement intérieur (122) du premier bourrelet d'étanchéité (118) étant plus grand que l'évidement (124), de sorte que le premier bourrelet d'étanchéité (118) soit maintenu dans l'évidement (124) avec une prétension.

2. Agencement de soupape selon la revendication 1, **caractérisé en ce que** la membrane (115) est sensiblement en forme de joint torique et le premier bourrelet d'étanchéité (118) est disposé à une extrémité extérieure radiale de la membrane (115).

3. Agencement de soupape selon la revendication 1 ou 2, **caractérisé en ce que** le boîtier (102) comprend au moins un rebord (130) qui correspond sensiblement à la forme d'au moins un échelon (129) du premier bourrelet d'étanchéité (118).

4. Agencement de soupape selon l'une quelconque des revendications 1 à 3, **caractérisé en ce que** la soupape de régulation de pression (111) comprend au moins un rebord (127) qui correspond sensiblement à la forme d'au moins un échelon (126) du premier bourrelet d'étanchéité (118) .

5. Agencement de soupape selon l'une quelconque des revendications 1 à 4, **caractérisé en ce que** la membrane (115) comprend au moins deux bourrelets d'étanchéité (118, 119) et au moins une partie flexible (117) disposée entre les au moins deux bourrelets d'étanchéité (118, 119).

6. Agencement de soupape selon l'une quelconque des revendications 1 à 5, **caractérisé en ce que** le premier bourrelet d'étanchéité (118) comprend au moins une rainure (131, 431, 433, 731).

7. Agencement de soupape selon l'une quelconque des revendications 1 à 5, **caractérisé en ce que** le premier bourrelet d'étanchéité (118) comprend au moins une saillie (125, 128, 225, 325, 425, 428, 432, 525, 625, 628, 725, 728).

8. Agencement de soupape selon la revendication 7, **caractérisé en ce qu'**au moins une saillie (425, 428, 432, 525, 728) a une section transversale sensiblement rectangulaire.

9. Agencement de soupape selon la revendication 7 ou 8, **caractérisé en ce qu'**au moins une saillie (125, 128, 325, 625, 628, 725) a une section transversale conique.

10. Agencement de soupape selon l'une quelconque des revendications 1 à 9, **caractérisé en ce que** le premier bourrelet d'étanchéité a un corps sensiblement rectangulaire (134).

11. Agencement de soupape selon l'une quelconque des revendications 6 à 10, **caractérisé en ce qu'**au moins une rainure (431, 433, 731) est disposée dans un côté radialement externe (123) du premier bourrelet d'étanchéité (118).

12. Agencement de soupape selon l'une quelconque des revendications 6 à 11, **caractérisé en ce qu'**au moins une rainure (131) est disposée à une extrémité du premier bourrelet d'étanchéité (118) opposée à la partie flexible (117).
